# EUROPEAN PATENT APPLICATION

(11) **EP 2 375 022 A1**
(43) Date of publication of application: **12.10.2011**
(21) Application number: 09837481.2
(22) Date of filing: 07.01.2009
(51) Int. Cl.: F01N 3/08, F01N 3/20

(54) **EXHAUST GAS PURIFYING APPARATUS FOR INTERNAL COMBUSTION ENGINE**

(71) Applicant: Toyota Jidosha Kabushiki Kaisha, Toyota-shi, Aichi 471-8571 (JP)
(72) Inventor: SATO, Masaaki, Toyota-shi Aichi 471-8571 (JP)
(74) Representative: TBK
(86) International application number: PCT/JP2009/050092
(87) International publication number: WO 2010/079592

(57) **Abstract**

There is provided an exhaust purifying device for an internal combustion engine in which NOx can be appropriately purified in a selective catalytic reduction and occurrence of an ammonia slip due to a temperature rise of the selective catalytic reduction can be restricted. In the exhaust purifying device for the internal combustion engine provided with the selective catalytic reduction (70) provided in an exhaust passage (10) of the internal combustion engine (1) to selectively reduce nitrogen oxides contained in an exhaust gas (EG) and a urea water adding valve (60) for supplying ammonia as a reducing agent, an absorption excess amount of the ammonia in the selective catalytic reduction (70) is calculated based upon a maximum absorption amount of the ammonia capable of being absorbed by the selective catalytic reduction (70) and changing with a temperature and an actual absorption amount of the ammonia actually absorbed in the selective catalytic reduction (70), and at least one of an operating condition in the internal combustion engine (1) and the urea adding valve (60) is controlled in such a manner that the absorption excess amount calculated is secured at a predetermined value or greater.

## Description

### Technical Field

The present invention relates to an exhaust purifying device for an internal combustion engine.

### Description of the Related Art

There is generally known a NOx catalyst for purifying nitrogen oxides (NOx) contained in an exhaust gas, as an exhaust purifying device arranged in an exhaust system for an internal combustion engine such as a diesel engine. Various types of NOx catalysts are known as the NOx catalyst, but among them, there is well known in public a selective catalytic reduction for sequentially reducing and removing NOx by addition of a reducing agent. Urea water or ammonia is known as the reducing agent. Urea water in which water and urea are mixed in a given ratio is usually injected and supplied in an exhaust gas upstream of the catalyst and urea contained in the urea solution is hydrolyzed by heat of the exhaust gas or the like to generate ammonia. In addition, by a reduction function of the ammonia which removes oxygen from NOx and reduces it back to nitrogen on the selective catalytic reduction, NOx in the exhaust gas is purified.

It is known that the selective catalytic reduction has a capability of absorbing ammonia but it has a characteristic that as a temperature thereof increases, an ammonia amount which can be absorbed decreases. For example, when a temperature of an exhaust gas increases at the time of burning PM (particulate matter) deposited in a DPF (diesel particulate filter) provided in an exhaust passage for an internal combustion engine to forcibly regenerate the DPF, the ammonia amount which can be absorbed in the selective catalytic reduction temporarily decreases and the ammonia is separated from the selective catalytic reduction, possibly releasing the ammonia to an outside, that is, causing occurrence of a so-called ammonia slip. Patent Document 1 discloses the technology in which, for preventing occurrence of the ammonia slip at the forced regeneration time of the DPF, in a case where it is determined that the ammonia slip occurs due to a rise in a temperature of the selective catalytic reduction by the forced regeneration of the DPF, supply of the ammonia to the selective catalytic reduction is cancelled.

Patent Document 1: Japanese Patent Laid-Open No. 2006-342734

### DISCLOSURE OF THE INVENTION

### Technical Problem

Incidentally, for preventing the occurrence of the ammonia slip, when the supply of the ammonia to the selective catalytic reduction is cancelled, there is a possibility that an amount of NOx absorbed in the selective catalytic reduction abruptly decreases and in reverse, NOx can not be purified. In addition, the temperature of the selective catalytic reduction abruptly increases not only at the forced regeneration time of the DPF but also at the time an operation condition of the internal combustion engine is at abrupt acceleration, wherein there is a possibility that the ammonia slip occurs. In this case, when the supply of the ammonia to the selective catalytic reduction is cancelled, there is a possibility that NOx can not be appropriately purified in the selective catalytic reduction and is discharged to an outside as it is.

That is, it is difficult to appropriately manage the ammonia amount absorbed in the selective catalytic reduction only by control of the supply amount of the ammonia.

The present invention is made in view of the foregoing problem, and an object of the present invention is to provide an exhaust purifying device for an internal combustion engine in which NOx can be appropriately purified in a selective catalytic reduction and occurrence of an ammonia slip due to a temperature rise of the selective catalytic reduction can be restricted.

### Technical Solution

An exhaust purifying device for an internal combustion engine according to the present invention provided with a selective catalytic reduction provided in an exhaust passage of the internal combustion engine to selectively reduce nitrogen oxides contained in an exhaust gas and a reducing agent supplying means for supplying ammonia to the selective catalytic reduction as a reducing agent, comprises absorption excess amount calculating means for calculating an absorption excess amount of the ammonia in the selective catalytic reduction based upon a maximum absorption amount of the ammonia capable of being absorbed by the selective catalytic reduction and changing with a temperature and an actual absorption amount of the ammonia actually absorbed in the selective catalytic reduction, and controlling means for controlling at least one of an operating condition of the internal combustion engine and the reducing agent supplying means in such a manner that the absorption excess amount calculated by the absorption excess amount calculating means is secured at a predetermined value or greater.

In the above construction, the controlling means may adopt a construction of controlling at least one of the operating condition of the internal combustion engine and the reducing agent supplying means in a case where a changing rate of the absorption excess amount calculated by the absorption excess amount calculating means exceeds a predetermined threshold value.

In the above construction, the controlling means may adopt a construction of performing NOx increasing control for increasing nitrogen oxides generated in the internal combustion engine and/or catalyst temperature control for lowering a temperature or restricting a temperature rise of the selective catalytic reduction at the time of controlling the operating condition in the internal combustion engine.

In the above construction, the controlling means may adopt a construction of decreasing an amount of an EGR gas recirculating a part of the exhaust gas to an intake system to increase an amount of NOx, and in the above construction, the controlling means can advance an injection timing for injecting fuel into the internal combustion engine to increase an amount of NOx.

In the above construction, the controlling means may adopt a construction of performing the catalyst temperature control by decreasing an amount of an EGR gas recirculating a part of the exhaust gas to an intake system.

### Advantageous Effects

According to the present invention, NOx can be appropriately purified in the selective catalytic reduction and occurrence of the ammonia slip can be restricted also in a case where the temperature of the selective catalytic reduction rises.

### BRIEF DESCRIPTION OF THE DRAWINGS

[Fig. 1] Fig. 1 is a diagram showing the construction of an exhaust purifying device according to an embodiment of the present invention;
[Fig. 2] Fig. 2 is a graph showing a relation between a catalyst bed temperature of a selective catalytic reduction and a maximum absorption amount of ammonia capable of being absorbed in the selective catalytic reduction; and
[Fig. 3] Fig. 3 is a flow chart showing an example of the processing for controlling an amount of the ammonia absorbed in the selective catalytic reduction by an ECU.

### BEST MODE FOR CARRYING OUT THE INVENTION

Hereinafter, the best embodiment of the present invention will be explained with reference to the accompanying drawings.

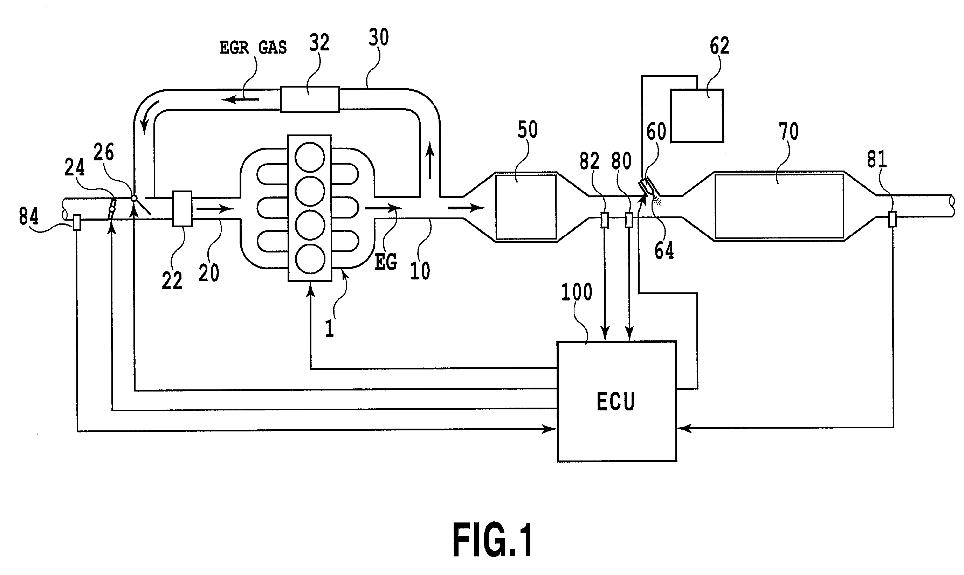

Fig. 1 is a construction diagram showing an exhaust purifying device in an internal combustion engine according to an embodiment of the present invention.

An internal combustion engine 1 is for example a diesel engine and the internal combustion engine 1 includes an exhaust passage 10 for discharging an exhaust gas EG from each cylinder to an outside, an intake passage 20 for introducing intake air into each cylinder, and an EGR (Exhaust Gas Recirculation) passage 30 for recirculating a part of the exhaust gas EG into the intake passage 20.

An oxidation catalytic converter 50, a urea water adding valve 60 as reducing agent supplying means, and a selective catalytic reduction converter 70 are provided in the exhaust passage 10 in that order from the upstream side thereof.

The oxidation catalytic converter 50 carries an oxidation catalyst composed of catalytic metal and the like oxidizing unburned fuel and the like in the exhaust gas EG. A temperature of the exhaust gas EG rises by an oxidation reaction in the oxidation catalytic converter 50.

The urea water adding valve 60 is connected to a urea water tank 62, in which urea water of a predetermined concentration is accommodated, by a conduit. The urea water in the urea water tank 62 is supplied to the urea water adding valve 60 by a pump which is not shown, and the urea water adding valve 60 supplies the urea water 64 having an amount in response to a control command from an electronically controlled unit (ECU) 100 to be described later to the exhaust passage 10 for the selective catalytic reduction converter 70. The urea water added in the exhaust passage 10 is hydrolyzed by heat of the exhaust gas EG to generate ammonia.

The selective catalytic reduction converter 70 uses a catalytic kind such as zeolite or vanadium to carry a well-known selective catalytic reduction (SCR) for reducing nitrogen oxides by a so-called urea selective reduction process. The urea water added from the urea water adding valve 60 is hydrolyzed by heat of the exhaust gas to generate ammonia. The ammonia is absorbed in the selective catalytic reduction. The selective catalytic reduction uses ammonia as a reducing agent to selectively reduce NOx contained in the exhaust gas EG to a nitrogen gas and water. The selective catalytic reduction converter 70 has a well-known structure, and may use the structure having, for example, Si, O, and Al as main components and zeolite containing Fe ions or the structure carrying a catalytic metal such as a vanadium catalyst (V₂O₅) on a surface of a substrate made of oxidized aluminum alumina, for example. However, the selective catalytic reduction converter 70 is not limited thereto.

When an excessive amount of the ammonia beyond the ammonia absorption capability of the selective catalytic reduction converter 70 is supplied thereto, the ammonia slips the selective catalytic reduction and is discharged downstream of the selective catalytic reduction converter 70. Accordingly, it is preferable that an ammonia amount (urea water amount) to be supplied to the selective catalytic reduction converter 70 is adjusted to an amount to the extent that reduction of NOx is the most efficiently performed and the slip of the ammonia does not occur. It should be noted that an amount of the ammonia to be absorbed in the selective catalytic reduction will be in detail described later.

A throttle valve 24, an EGR valve 26, and a surge tank 22 are provided in the intake passage 20 in that order from the upstream side thereof.

The throttle valve 24 adjusts an amount of air to be supplied to the internal combustion engine 1 in response to a control command from the ECU 100.

The EGR valve 26 adjusts an amount of an EGR gas as an exhaust gas to be recirculated to the intake passage 20 via the EGR passage 30 in response to a control command from the ECU 100.

An EGR cooler 32 is provided in the EGR passage 30. The EGR cooler 32 cools the EGR gas passing through the EGR passage 30.

The ECU 100 is constructed of hardware including a CPU (Central Processing Unit), a ROM (Read Only Memory), a RAM (Read Access Memory), a backup memory such as an EEPROM (Electrically Erasable and Programmable Read Only Memory), an input interface circuit including an A/D converter, a buffer and the like, and an output interface circuit including a drive circuit and the like, and necessary software. Detection signals of NOx sensors 80 and 81 respectively provided at the upstream side and at the downstream side of the selective catalytic reduction converter 70, a temperature sensor 82 for detecting a temperature of an exhaust gas EG flowing into the selective catalytic reduction converter 70, and an air flow meter 84 provided in the intake passage 20 are inputted to the ECU 100. In addition, the ECU 100 controls an ignition timing of a spark plug, an injection timing and an injection quantity of a fuel injection valve, and the like, which may be provided in each cylinder of the internal combustion engine and be not shown, as well as the throttle valve 24 and the EGR valve 26.

The ECU 100 adjusts an addition amount of the urea water adding valve 60 as the reducing agent adding means based upon output of the NOx sensor 80 provided at the downstream side (outlet vicinity) of the selective catalytic reduction converter 70.

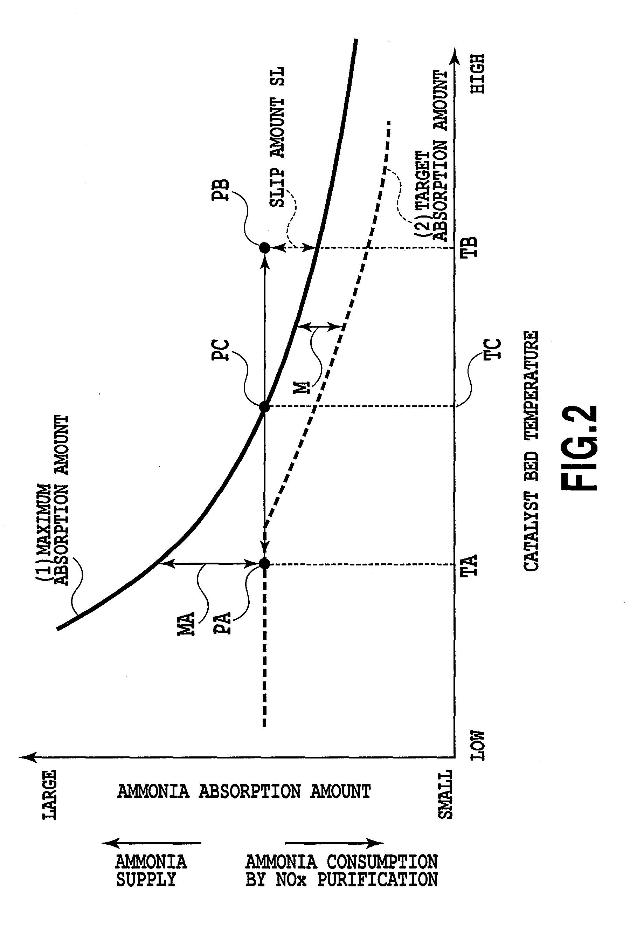

Next, the characteristic of the selective catalytic reduction and the basic principle of the present invention will be explained with reference to Fig. 2.

In Fig. 2, the code (1) shows a maximum absorption amount of ammonia which the selective catalytic reduction can absorb. It is apparent that the maximum absorption amount (1) changes with a catalyst bed temperature, increases as the catalyst bed temperature is the lower, and decreases as the catalyst bed temperature is the higher. In a state where the ammonia absorption amount of the selective catalytic reduction is smaller than the maximum absorption amount (1), as a supplying amount of the ammonia to the selective catalytic reduction is increased, the ammonia absorption amount of the selective catalytic reduction is increased. However, when the ammonia absorption amount of the selective catalytic reduction exceeds the maximum absorption amount (1), the ammonia slip occurs.

For example, in a state of PA where the current catalyst bed temperature of the selective catalytic reduction is indicated at TA, the ammonia absorption amount of the selective catalytic reduction in the state PA does not reach the maximum absorption amount (1) and the absorption excess amount MA exists until it reaches the maximum absorption amount (1). It is assumed that the operating condition of the internal combustion engine 1 changes from this state PA, for example, into an abrupt acceleration state, a temperature of the exhaust gas increases, and a bed temperature of the selective catalytic reduction abruptly increases to TB. In the process where the bed temperature of the selective catalytic reduction rises from TA to TB, at a point where the bed temperature of the selective catalytic reduction reaches TC, the ammonia absorption amount of the selective catalytic reduction reaches the maximum absorption amount (1). That is, the selective catalytic reduction is saturated and the excess absorption amount does not exist. As the bed temperature of the selective catalytic reduction further rises, since the maximum absorption amount (1) decreases with the bed temperature of the catalyst, the ammonia already absorbed in the selective catalytic reduction is separated from the selective catalytic reduction and the ammonia slip of a slip amount SL occurs as shown in Fig. 2.

In the present embodiment, for restricting occurrence of the ammonia slip due to an abrupt rise of the bed temperature of the selective catalytic reduction as described above, first, a target absorption amount (2) which should be absorbed in the selective catalytic reduction is defined as shown in Fig. 2. The target absorption amount (2) is set in such a manner that the absorption excess amount M of the ammonia to the maximum absorption amount (1) is secured at a predetermined value or greater. The target absorption amount (2) is set to a fixed value in a region where the catalyst bed temperature is relatively low, for example, but is set to a lower value as the catalyst bed temperature increases for securing the absorption excess amount M of the ammonia at a predetermined value or greater.

In addition, in the present embodiment, in a case where an actual absorption amount of the ammonia in the selective catalytic reduction exceeds the set target absorption amount (2), at least one of the operating condition of the internal combustion engine 1 and the urea adding valve 60 is controlled such that the absorption excess amount M of the ammonia can be secured at a predetermined value or greater.

Specifically, in a case of controlling an operating condition of the internal combustion engine 1, the absorption excess amount M of the ammonia is increased by performing control of increasing an amount of NOx generated in the internal combustion engine 1 to promote consumption of the ammonia absorbed in the selective catalytic reduction by purification of NOx. For increasing the amount of NOx, for example, the EGR valve 26 is controlled to decrease an amount of the EGR gas recirculating a part of the exhaust gas EG to the intake system. In addition, the amount of NOx can be increased by advancing an injection timing of the fuel injection valve in the internal combustion engine 1 for injecting fuel.

In addition, in a case of controlling the operating condition in the internal combustion engine 1, control of lowering a temperature of the selective catalytic reduction or restricting a temperature rise thereof is performed to prevent the maximum absorption amount (1) from being lowered due to a rise of the catalyst bed temperature, as a result securing the absorption excess amount M of the ammonia. The temperature control of the selective catalytic reduction can be performed by controlling the EGR valve 26 to reduce an amount of the EGR gas recirculating a part of the exhaust gas EG to the intake system, for example. In addition, the throttle valve 24 is controlled to increase an amount of air flowing into each cylinder in the internal combustion engine 1, thus making it possible to lower the temperature or prevent the temperature rise of the selective catalytic reduction.

In a case of controlling the urea adding valve 60, the ammonia supplying amount is reduced or the ammonia supplying amount is reduced to zero to prevent an actual absorption amount of the ammonia to be absorbed in the selective catalytic reduction from increasing, thus making it possible to prevent a reduction of the absorption excess amount M of the ammonia.

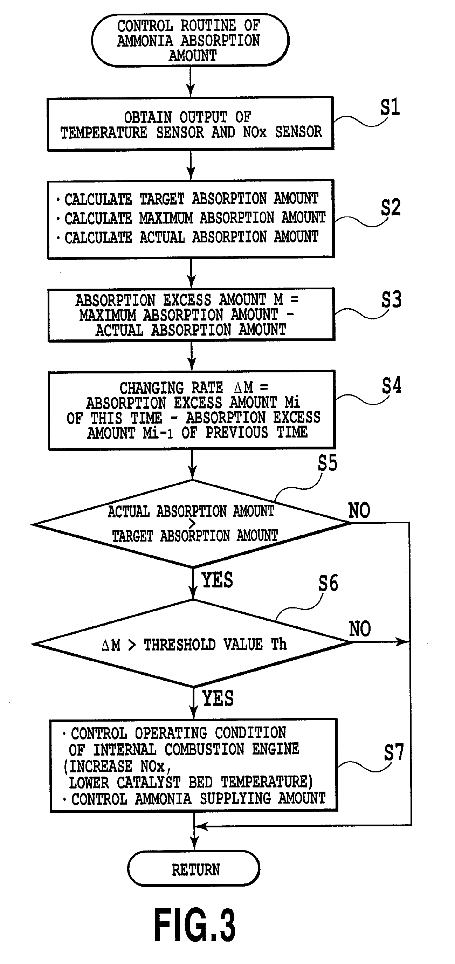

Next, an example of ammonia absorption amount controlling processing in the selective catalytic reduction based upon the aforementioned principle by the ECU 100 will be explained with reference to a flow chart shown in Fig. 3. It should be noted that the processing routine shown in Fig. 3 is executed for each predetermined time, for example.

First, the outputs from the NOx sensors 80 and 81 respectively provided at the upstream side and at the downstream side of the selective catalytic reduction converter 70 and the temperature sensor 82 for detecting a temperature of the exhaust gas EG flowing into the selective catalytic reduction converter 70 are obtained (step S1).

Based upon the output of the temperature sensor 82, the catalyst bed temperature of the selective catalytic reduction is estimated. The ECU 100 retains the maximum absorption amount (1) and the target absorption amount (2) as a map or a function so as to be associated with the catalyst bed temperature as shown in Fig. 2, and the target absorption amount and the maximum absorption amount corresponding to the catalyst bed temperature estimated are calculated using the map or the function (step S2). Further, an actual absorption amount of the ammonia absorbed in the selective catalytic reduction is calculated from the outputs of the NOx sensors 80 and 81, the adding amount of the urea water 64 and the like (step S2).

Next, the absorption excess amount M of the selective catalytic reduction in the estimated catalyst bed temperature is calculated (step S3). The absorption excess amount M is calculated from the maximum absorption amount and the actual absorption amount calculated in step S2.

Next, a changing rate ΔM of the absorption excess amount M is calculated from an absorption excess amount Mi of this time and an absorption excess amount Mi-1 of the previous time calculated in step S3 (step S4). The changing rate ΔM shows a rate in a rise or a degree of a change of the catalyst bed temperature and has a larger value as the catalyst bed temperature abruptly changes.

Next, by comparing the target absorption amount and the actual absorption amount calculated in step S2 (step S5), in a case where the actual absorption amount does not exceed the target absorption amount, it is determined that the absorption excess amount M is sufficiently secured, and the process ends.

In step S5, in a case where it is determined that the actual absorption amount exceeds the target absorption amount, it is determined that the absorption excess amount M is reduced, and it is determined whether or not the changing rate ΔM calculated in step S4 exceeds a predetermined threshold value Th (step S6). In a case where the changing rate ΔM does not exceed the predetermined threshold value Th, since the changing rate of the catalyst bed temperature is not so large, it is determined that the ammonia slip does not occur, and the process ends.

In a case where the changing rate ΔM exceeds the predetermined threshold value Th in step S6, it is determined that the change (rise) of the catalyst bed temperature is abrupt and there is a high possibility that the ammonia slip occurs, and the processing in step S7 is executed. The processing in step 7 is, as described above, one of or a combination of the control of increasing the amount of NOx generated in the internal combustion engine 1, the control of lowering the temperature or restricting the temperature rise of the selective catalytic reduction, and the control of reducing the supplying amount or cancelling the supply of the urea water 64 from the urea water adding valve 60.

In the above embodiment, the explanation is made on a case where the supplied urea water is hydrolyzed to supply the ammonia to the selective catalytic reduction, but the present invention is not limited thereto, and it may be possible to directly supply the ammonia to the selective catalytic reduction.

The above embodiment is constructed of providing the oxidation catalytic converter 50 in the exhaust passage 10, and it may be possible to further provide a diesel particulate filter (DPF). In addition, the present invention can be applied also to a case where at the forced regeneration processing of the DPF, a temperature of the selective catalytic reduction arranged downstream of the DPF rises.

In the above embodiment, in a case where the actual absorption amount of the ammonia is below the target absorption amount, it may be possible to control the urea water adding valve 60 to increase the ammonia amount to be supplied to the selective catalytic reduction.

## Claims

1. An exhaust purifying device for an internal combustion engine provided with a selective catalytic reduction provided in an exhaust passage of the internal combustion engine to selectively reduce nitrogen oxides contained in an exhaust gas and a reducing agent supplying means for supplying ammonia as a reducing agent to the selective catalytic reduction, comprising:
absorption excess amount calculating means for calculating an absorption excess amount of the ammonia in the selective catalytic reduction based upon a maximum absorption amount of the ammonia capable of being absorbed by the selective catalytic reduction and changing with a temperature and an actual absorption amount of the ammonia actually absorbed in the selective catalytic reduction; and
controlling means for controlling at least one of an operating condition of the internal combustion engine and the reducing agent supplying means in such a manner that the absorption excess amount calculated by the absorption excess amount calculating means is secured at a predetermined value or greater.

2. An exhaust purifying device for an internal combustion engine according to claim 1, wherein
the controlling means controls at least one of the operating condition of the internal combustion engine and the reducing agent supplying means in a case where a changing rate of the absorption excess amount calculated by the absorption excess amount calculating means exceeds a predetermined threshold value.

3. An exhaust purifying device for an internal combustion engine according to claim 1 or 2, wherein
the controlling means performs NOx increasing control for increasing nitrogen oxides generated in the internal combustion engine and/or catalyst temperature control of lowering a temperature or restricting a temperature rise of the selective catalytic reduction at the time of controlling the operating condition in the internal combustion engine.

4. An exhaust purifying device for an internal combustion engine according to claim 3, wherein
the controlling means decreases an amount of an EGR gas recirculating a part of the exhaust gas to an intake system to increase an amount of NOx.

5. An exhaust purifying device for an internal combustion engine according to claim 3, wherein
the controlling means advances an injection timing for injecting fuel into the internal combustion engine to increase an amount of NOx.

6. An exhaust purifying device for an internal combustion engine according to any of claims 3 to 5, wherein
the controlling means performs the catalyst temperature control by decreasing an amount of an EGR gas recirculating a part of the exhaust gas to an intake system.
